# EUROPEAN PATENT SPECIFICATION

(11) **EP 3 922 524 B1**
(45) Date of publication and mention of the grant of the patent: **14.01.2026**
(21) Application number: 20178688.6
(22) Date of filing: 08.06.2020
(51) Int. Cl.: B60W 30/10, B60W 40/02, B60W 50/00, B60W 30/18, B60W 10/18, B60W 10/20

(54) **A SYSTEM AND METHOD FOR SUPPORTING WIND DETECTION AND COMPENSATION IN A VEHICLE, VEHICLE AND COMPUTER PRODUCT**
SYSTEM UND VERFAHREN ZUR UNTERSTÜTZUNG DER WINDDETEKTION UND -KOMPENSATION IN EINEM FAHRZEUG, FAHRZEUG SOWIE COMPUTERPROGRAMMPRODUKT
SYSTÈME ET PROCÉDÉ DE SUPPORT DE DÉTECTION ET DE COMPENSATION DU VENT DANS UN VÉHICULE, VÉHICULE ET PRODUIT INFORMATIQUE

(43) Date of publication of application: 15.12.2021
(73) Proprietor: KNORR-BREMSE Systeme für Nutzfahrzeuge GmbH, 80809 München (DE)
(72) Inventor: STRAUB, Kornel, 2013 Pomáz (HU); NEMETH, Huba, 1116 Budapest (HU); GYURKÓ, Zoltán, 8771 Hahót (HU)

(56) References cited:
- EP-A1- 3 659 888
- DE-A1- 102014 215 259
- DE-A1- 102018 211 242
- DE-B4- 112014 002 961
- JP-A- 2015 093 618
- US-A1- 2018 210 447
- US-A1- 2020 017 112

## Description

The present invention relates to a system and a method for supporting wind detection and compensation in a vehicle, and in particular to a system and a method for side wind detection using present truck sensors, and for a preparation of side wind compensation using said sensors, weather data, and map data in the behavior planning and motion control of autonomous vehicles.

Compensating effects of a side wind (or cross wind) is important for vehicles in general, and, due to presenting a larger impact area, for commercial vehicles in particular. Side wind can strongly affect the motion of vehicles, especially heavy-duty vehicles (like e.g a truck, optionally with any kind of trailer), whose large side surface can lead to a large lateral force acting on the vehicle. There exist systems for automatic compensation of disturbances caused by side wind on vehicles. An assistant for side wind effects, together with a corresponding method for its operation, is e.g disclosed in US2014200766 (A1). Building on earlier references for detection and compensation of forces exerted by wind on a vehicle, this assistant in particular incorporates a frequency sensitivity into the assessment and compensation of a detected disturbance. Braking and steering interventions are mentioned as means for a compensation. Another system is disclosed in CN108545077 (A), which includes a sensor for detecting a wind speed at the position of the vehicle, and in particular bases the assessment of the wind situation on an angle between a velocity of the wind and a velocity of the vehicle.

Economically feasible embodiments of the subject matter of the mentioned patents however cannot achieve a complete compensation, i.e. to an extent where the trajectory of the vehicle is entirely unaffected by the side wind. Rather, vehicles will still display lurching or quivering, which can negatively affect driving efficiency and safety, in particular during maneuvers. With the roots of this shortcoming based in the complexity of a sufficiently adapted and time-sensitive response, the first of the quoted patents even mentions an advantage in incomplete compensation, as a driver of the vehicle will still be able to notice the presence of the wind. The second patent in particular discloses a warning or reminder signal directed at the driver, thus again implicitly relying on human amendatory adjustment.

Further references include DE 10 2018 211242 A1, which discloses a method for compensating side wind effects on a vehicle including determining from a position and a trajectory of the vehicle that the vehicle approaches a place where a risk of a side wind exists. The method may further comprise using sensors to determine a wind impact from a driving behavior, and taking a preparation measure to compensate for wind effects.

Furthermore, DE 10 2014 215259 A1 discloses a method for automatically choosing a driving mode for a vehicle along a driving route. The method includes collecting side wind data from a side wind sensor, a navigation system, or via the internet.

US 2020/017112 A1 discloses a wind data estimating apparatus which uses data from sensors on the vehicle to determine a first acceleration due to an area where the vehicle is, and a second acceleration due to a driving operation. A difference between the first acceleration and the second acceleration is then attributed to an influence of wind on the vehicle.

US 2018/210447 A1 discloses a wind detection system which collects data from existing sensors in order to determine if air-borne particles can be identified around the vehicle. If this is the case, the system estimates a wind speed and direction, and determines a best action to avoid or mitigate a wind-caused impact on the vehicle.

EP 3 659 888 A1 discloses a driving force distribution control device to control driving forces for right and left wheels of a vehicle. The driving force distribution control device includes an electronic control unit configured to obtain crosswind information.

JP 2015 093 618 A discloses a wind detection system for detecting wind affecting a vehicle, which calculates the absolute values of yaw rate, roll angle, vertical acceleration, and lateral acceleration, and determines that there is a crosswind blowing against the vehicle when all of the calculated absolute values exceed corresponding threshold values.

DE 11 2014 002 961 B4 discloses a method for determining if a vehicle suffers a rollover. The method employs 3D cameras on the vehicle for determining a roll angle of the vehicle from determining a distance from the respective camera to the ground along the vehicle.

With the advent of autonomously driving cars, compensation of side wind disturbances has become a more pressing task, as safety standards require a reliable system response with little or no human intervention. In many situations, hitherto sufficient automatic compensation will not suffice. Therefore, there is a demand for a system which improves automatic side wind response, in particular for autonomously driving commercial vehicles.

An improvement over conventional devices is achieved by a system of claim 1, a vehicle of claim 6, a method according to claim 7, or a computer product according to claim 8. The dependent claims refer to further advantageous realizations of the subject matter of the independent claims.

The present invention relates to a system according to claim 1 for supporting wind detection and compensation in a vehicle with a driving automation system, the vehicle comprising a communication interface for sending and receiving communication data. The system comprises a data collection module, an assessment module, and a compensation module. The data collection module is configured to collect, from the driving automation system and/or via the communication interface, data about a wind situation at a current or anticipated location of the vehicle. The assessment module is configured to assess the wind situation. The compensation module is configured to provide, on the basis of the wind situation, a compensation support for the driving automation system.

Embodiments encompass realizations of the system as a supplement to a conventional wind compensation facility, as well as realizations as stand-alone devices. In the former case, the assessment module can in particular be configured to improve upon a response of the conventional facility. The conventional facility may, for example, include wind speed sensors, and act in response to data collected by these sensors, while the system may be added in order to counteract shortcomings in the conventional wind compensation.

A driving automation system, for the purpose of this patent, is the hardware and software that are collectively capable of performing part or all of a plurality of dynamic driving tasks on a sustained basis. The term will be used generically to describe any system capable of providing level 1 to 5 driving automation (level 1 comprises mere driving assistance, level 2 means a partial driving automation, supervised by a driver, level 3 stands for conditional driving automation, where a driver is still required as a fallback-user, level 4 stipulates high driving automation, where a driver may still be requested to intervene, and level 5 stands for full driving automation, where no human driver is required). The driving automation system may in particular include sensors on the vehicle, configured to provide sensor data for the driving automation system. A conventional wind compensation facility may be included in the driving automation system. Furthermore, the communication interface may be a part of the driving automation system. It may be configured to send and/or receive data for the dynamic driving tasks.

The communication interface may comprise radio equipment, and may in particular be a Vehicle-to-Everything, V2X, system following any standard (short-ranged as as e.g. Dedicated Short-Range Communications, DSRC, Cooperative Intelligent Transport Systems, C-ITS, or cellular as e.g. Cellular Vehicle-to-Everything, C-V2X). The data collection module is configured to employ the communication interface in order to collect data on a wind situation, which may in particular comprise wind speed and direction currently and/or forecast. In order to collect the data relevant for the current or anticipated position, the data collection module may obtain information about the current or anticipated location of the vehicle from the driving automation system (obtained e.g. via a Global Navigation Satellite System, GNSS, and/or from a projected trajectory of the vehicle), and/or from a driver (e.g. through manual input).

The assessment module is configured to process the collected data, and to extract information relevant for a compensation of effects of wind on the vehicle, or an amelioration thereof. According to embodiments, this includes extracting information regarding wind speed, direction, or a rate or strength of gusts relevant for the vehicle at the current or anticipated position, and/or shortcomings of a response of a wind compensation facility of the vehicle itself or of another vehicle, e.g. at the anticipated position. This processing and extracting of data is collectively referred to as assessing the wind situation for the current or anticipated position.

The compensation support module is configured to turn the assessed wind situation into a compensation support, by which will be understood a set of machine executable instructions adapted to change at least a part of the driving automation system.

The compensation support may in particular modify steering and/or behavior planning at the current or anticipated location. Several or all elements of the driving automation system may be affected, in particular systems for cruise control or adaptive cruise control, collision avoidance, lane keeping, lane changing, and overtaking, but also long-term tasks like e.g. an economic driving mode. Embodiments in particular stipulate a measured increase of safety distances to other vehicles, a change of management of a steering or overtaking processes (overtaking may e.g. be suppressed, delayed, or sped up), or a change or tuning of a process designed to counteract a sudden disturbance. Advantageously, the compensation support may be regularly updated, and may be applied for specific time spans or at specific locations. Compensation may in particular be applied in situations where a sudden change in side wind is to be expected, such as when the vehicle enters or leaves a tunnel or a bridge, or crosses a mountain pass.

The modules described above may be configured as separate devices, or partially or fully integrated into each other and/or into existing devices of the vehicle.

Optionally, if the driving automation system comprises a feedback control scheme, the compensation module is configured to adapt the feedback control scheme. The system may in particular operate as a feed forward control. It may where applicable alter or complement already present conventional feedback methods. The adaptation of the feedback control scheme may in particular refer to an interception and alteration of its output. A feedback control scheme may comprise a disturbance rejection control, DRC, or setpoint tracker, ST, adapted e.g. for keeping the vehicle within a driving lane.

Optionally, the data collection module is configured to collect location specific weather data, and/or data on wind from other vehicles within a predefined range from the current or anticipated location.

Sources for the data may in particular comprise weather stations, data from other vehicles, or other Internet sources. Of particular use are weather stations placed along the vehicle trajectory, e.g. a highway, especially in locations like bridges, mountain passes, tunnels, where high wind speed might be expected. Weather stations at or close to the current or anticipated location can provide first-hand present or anticipated wind speed and direction information. Data from other vehicles can in particular include sensor data related to wind speed and/or direction both directly (as e.g. measured by dedicated sensors) and/or indirectly (as e.g. offsets or corrections applied by facilities for wind compensation of other vehicles, or deviations from anticipated positions of other vehicles due to wind impact). Data may be communicated directly (e.g. via Vehicle-to-Vehicle, V2V, or Vehicle-to-Infrastructure, V2I, communication) and/or indirectly (e.g. via a Vehicle-to-Cloud, V2C, cloud service).

Optionally the driving automation system generates a driving mode information, and the compensation module is configured to employ the driving mode information in providing the compensation support.

Driving mode here refers to a type of driving scenario with characteristic dynamic driving task requirements (e.g. expressway merging, high speed cruising, low speed traffic jam, or closed-campus operations). The driving mode information may be generated by the automation system, acquired by the data collection module, and taken into account by the assessment module and the configuration module in their respective tasks in order to provide the compensation. In this way, systematic changes in parameters of e.g. the planning algorithm of the autonomous driving system underlying the driving mode may be included in the compensation support. Such systematic changes will depend on wind conditions e.g. along a particular segment of the vehicle trajectory (like a highway), where the particular driving mode is projected or assumed.

As an alternative to the autonomous driving system providing the information on the driving mode, the assessment module may be configured to assume a driving mode, e.g. based on the trajectory and geographic information.

According to the invention, the assessment module is configured to estimate, using sensor data from sensors on the vehicle which are part of the autonomous driving system, a current wind impact on the vehicle, and to use the current wind impact in the assessment of the wind situation.

Besides providing a feed-forward scheme for compensation of side wind effects n the vehicle, the system may therefore be configured to compensate via a feedback scheme based on sensor detections of wind effects on the vehicle. In particular, if the system is embodied as a supplemental device for e.g. a motion controller providing a disturbance rejection tuning as a part of the autonomous driving system, remaining effects of wind on the vehicle could be eliminated by means of the compensation support. The effects may be partially or fully accounted for by modifying the steering behavior on the road section where the vehicle is affected by side wind.

The vehicle sensors comprise an exteroceptive sensor detecting an inclination of the vehicle, and the assessment module is configured to estimate the current wind impact from the inclination of the vehicle.

According to the invention, inclination of the vehicle is detected using a sensor with the side of the vehicle combination in its field of view (e.g. mirror replacement camera or LIDAR). A machine learning algorithm may be employed by the assessment module to learn characteristic dimensions of the vehicle combination, such that a sudden change in the inclination of the vehicle body can be detected. According to the invention, the assessment module is configured to estimate, using the sensor data, a current wind impact on the vehicle from an inclination of the vehicle body by recognizing a change in the inclination at the trailer, and to use the current wind impact in the assessment of the wind situation.

The detected inclination may be attributed to a side wind by default, or correlated and/or verified by other available sensor data.

Optionally, the sensors comprise a sensor for detecting a lateral acceleration of the vehicle, the driving automation system comprises a means for detecting a driving situation, and the assessment module is configured to estimate, from the lateral acceleration and the current driving situation, an excess lateral acceleration attributable to a side wind, and to use the excess lateral acceleration in the assessment of the wind situation.

The driving situation may e.g. be a maneuver, like an overtaking, or a routing or configuration of the road or the lane, like a curve, which causes lateral accelerations of the vehicle. Embodiments calculate excess lateral acceleration from a difference between measured acceleration and acceleration of the vehicle due to the driving situation. Excess acceleration may be attributed to wind by default, or correlated with other data. Means for detecting a driving situation may include sensors, like e.g. a forward-facing sensor able to detect lane markings, or an information on the driving mode from the driving automation system, as described above.

Embodiments further refer to a vehicle according to claim 6 comprising a driving automation system for performing dynamic driving tasks, characterized by a system for supporting wind detection and compensation in the vehicle as described above.

The vehicle is a commercial vehicle. The commercial vehicle comprises a trailer.

The present invention also relates to a method according to claim 7 for supporting wind detection and compensation in a vehicle.

The present invention furthermore relates to a computer product according to claim

The method may thus be implemented, or the system my be embodied, in software or a computer program product.

Embodiments of the present invention can, in particular, implemented by software or a software module in an electronic control unit, ECU, of the vehicle.

Some examples of the systems and/or methods will be described in the following by way of examples only, and with respect to the accompanying figures, in which:
- Fig. 1: schematically depicts an embodiment of a system for supporting wind detection and compensation in a vehicle.
- Fig. 2: schematically depicts' relevant parts of an architecture for autonomous driving in the vehicle affected by the system for supporting wind detection and compensation.
- Fig. 3: illustrates side wind detection using an acceleration sensor and aforward-looking sensor of a vehicle.
- Fig. 4: illustrates side wind detection through an inclination of the vehicle body according to the invention.
- Fig. 5: illustrates effects of the compensation support in a driving automation system of a vehicle comprising an embodiment of the system for wind compensation support.

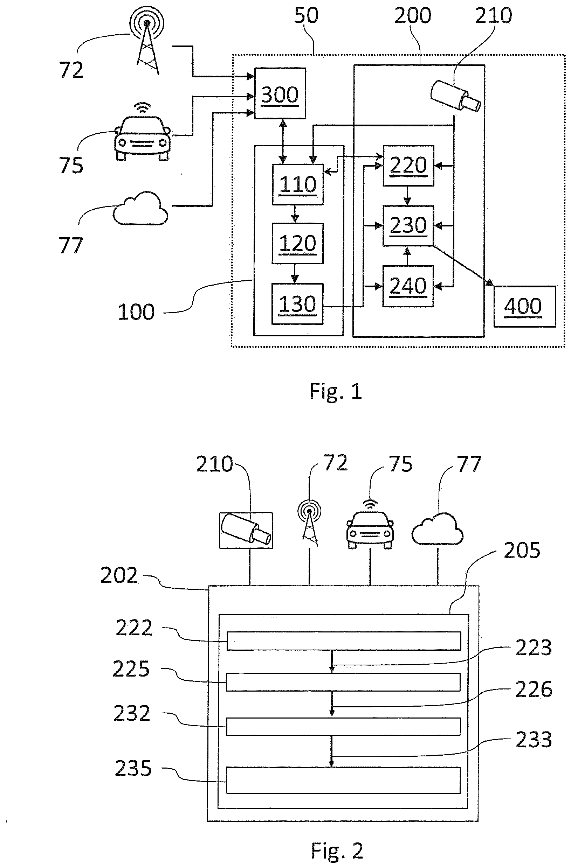

**Fig. 1** shows a scheme for an embodiment of a system 100 for supporting wind detection and compensation in a vehicle 50. The vehicle 50 comprises a driving automation system 200 and a communication interface 300 for sending and receiving communication data. The system 100 comprises a data collection module 110, configured to collect data from the driving automation system 200 and via the communication interface 300 about a wind situation at a current or anticipated location of the vehicle 50. The communication interface 300 may be a V2X or C-V2X system. from the may be partially or fully included in the In the present embodiment, data from the driving automation system 200 in particular includes data originating from sensors 210 on the vehicle 50, and from planning operations 220 of the automation system 200. The sensors 210 also provide data to modules of the driving automation system. Data obtained via the communication interface 300 derives from sources such as weather stations 72 and other vehicles 75 close to the current or anticipated position, and from a cloud service 77. In the present embodiment, the data collection module 110 is configured to actively request data from at least some sources via the communication interface 300, and from the planning operations 220, and to tap the data from the sensors 210.

The system 100 further comprises an assessment module 120, configured to assess the wind situation, and a compensation module 130, configured to provide, on the basis of the wind situation, a compensation support for the driving automation system 200. The compensation support is depicted as directed at several parts of the driving automation system 200, in particular at planning operations 210, execution operations 220, and feedback control operations 240. The compensation support is therefore adapted to modify the output of at least parts of the driving automation system, with the effect of causing an actuation 400 of the vehicle 50 to counteract effects by wind, in particular side wind, on the vehicle 50. Depending on the wind situation, a counteraction may include steering against the wind, braking, slowing the vehicle 50 down or speeding the vehicle 50 up. It may however also include changes in the behavior of the vehicle 50, in particular during long-term tasks like cruising, or during localized maneuvers like overtaking or lane changing. Here the compensation support may e.g. cause the vehicle 50 to keep increased safety distances, or to initiate, suppress or abort a maneuver. In a situation where the system has detected a change in wind speed at a particular location (such as, e.g., at the end of a tunnel, at an entrance of a bridge, or in other particular geographical circumstances), this may include a preemptive action of the vehicle, such as an increase in safety distance, or a suppression of a maneuver (e.g. an overtaking), or an initiation of a maneuver (e.g. a lane change in order to be able to slow down).

The present figure depicts the communication interface 300 and the system 100 as separate from the driving automation system 200. However, according to embodiments, both the communication interface 300 as well as the system 100 may be partially or fully integrated into the driving automation system 200.

**Fig. 2** schematically depicts relevant parts of an architecture for autonomous driving in the vehicle 50, and where these parts may be affected by an embodiment of a system 100 for supporting wind compensation. On top, the scheme displays, as possible input sources for data about a wind situation, vehicle sensors 210, weather stations 72, other vehicles 75, and a cloud service 77. The data is received by means of an on-board controller 202, which as one part includes software for Autonomous Driving, AD, or Highly Autonomous Driving, HAD, 205. This software plans and regulates the execution of dynamic driving tasks, and may in particular comprise modules such as a behavior planner 222, a path or trajectory planner 225, a motion controller 232, and a controller for steering or braking 235. The behavior planner may provide maneuver parameters 223, which are processed by the path or trajectory planner 225 into data detailing a concrete trajectory 226 for the vehicle 50, which is subsequently worked by the motion controller 232 into a demand for steering or braking 233.

The system 100 is configured to adapt, by the compensation support, the respective outputs of these modules, either by interception and modification, and/or by providing the compensation support as input to the modules 222, 225, 232, 235. The compensation support may thus in particular lead to optimized maneuver data 223, modified paths or trajectories 226, and/or to a modified angle/torque or brake demand 233 such as to compensate effects of wind on the vehicle 50.

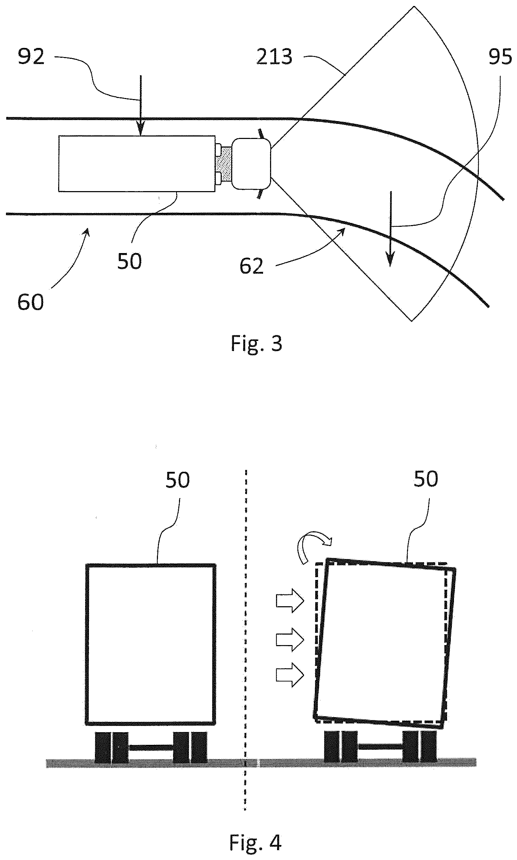

**Fig. 3** illustrates a way in which the system 100 may combine sensor data and/or data from trajectory planning in order to provide a wind compensation support. The picture shows a commercial vehicle 50 on a road 60 from above. The part of the road 60 ahead of the vehicle 50 bends into a curve 62, which the vehicle 50 is about to enter. Side wind causes sudden (lateral) accelerations 92 of the vehicle 50, which can be detected by an acceleration sensor on the vehicle 50. However, lateral acceleration of the vehicle 50 could be caused by other reasons as well, as e.g. in the present case the curvature of the road 60. Further possible such reasons may include a lane change, or a road inclination. These situations can be detected e.g. by a forward-looking sensor capable of detecting lane lines, whose data is tapped by the data collection module 110. These situations may also be detected by the data of a planned trajectory in combination with position or pose information, which the data collection module 110 may retrieve from the driving automation system 200.

The present figure displays a field of view 213 of a particular forward-looking sensor (like e.g. a lidar device), and the assessment module 120 is configured to determine, based on the data of the forward-looking sensor, a lateral acceleration 95 caused by the curve 62, or by a lane change. In combination with the acceleration 92 measured by the (lateral) acceleration sensor, the assessment module 120 may be configured to determine the effect on the vehicle 50 due to the side wind.

**Fig. 4** illustrates the way in which the system 100 combines sensor data and data from trajectory planning in order to provide a wind compensation support. The figure depicts a vertical cross-section orthogonal to a driving direction of a commercial vehicle 50 (the cross-section traverses the trailer of the vehicle combination), in two situations: On the left, no side wind affects the vehicle 50. On the right, a side wind causes a sudden change in an inclination of the vehicle body. According to the invention, such an effect of the side wind is detected by a sensor with the side of the vehicle combination in its field of view, as e.g. a mirror replacement camera, or a lidar device. The assessment module is configured to recognize the effect, e.g. by means of a machine learning algorithm adapted to learn the characteristic dimensions of the vehicle combination, including its pose. The assessment module 120 is configured to attribute the detected inclination to side wind. This may also be verified further by means of other available sensor data.

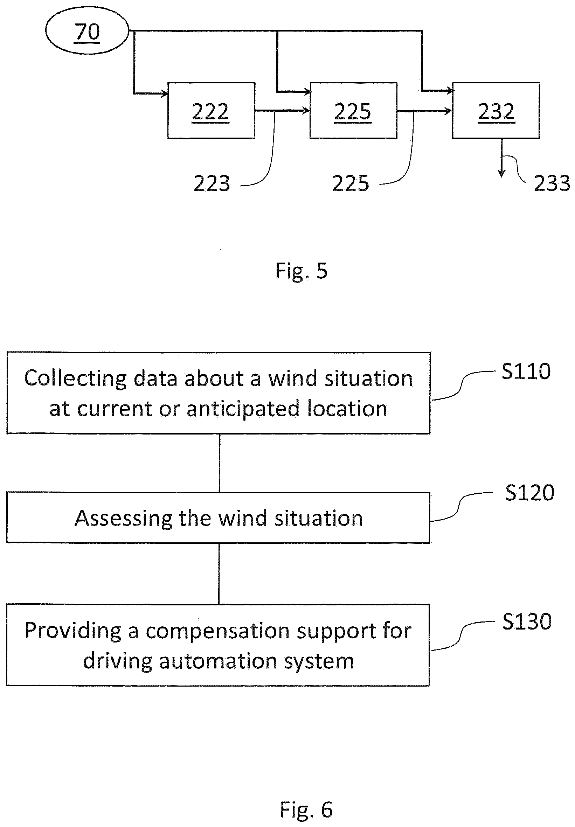

**Fig. 5** shows a diagram to illustrate effects of the compensation support in the driving automation system 200 for an embodiment of the system 100 for wind compensation support. The data collected by the data collection module 110 is used as input for a behavior planning algorithm 222 of an autonomous vehicle 50. Based on this data the algorithm can modify dynamic parameters of given maneuvers (e.g. lateral distance to other vehicles), or even restrict the usage of some maneuvers (e.g. overtaking) that could be dangerous in severe weather conditions. Based on the modified maneuver parameters 223, the path/trajectory planner 225 of the autonomous driving system 200 defines modified trajectories 226 for the motion controller 232, adapted to situations where side wind affects the vehicle 50. Along these modified trajectories 226, the vehicle 50 may not be unaffected by side wind, but the modification - e.g. through increased distances, or adapted maneuvers - serves as a supporting measure for wind compensation.

In a further advantageous embodiment, the motion controller 232 is configured to determine the steering angle/torque or brake demand 233 (Steer-by-braking) to compensate the effect of the side wind. This task may be effectuated in the motion controller 232 (or in the lateral controller part of the motion controller 232). Lateral controller parameters may be tuned based on the effects of side wind. In this way, the lateral controller reacts more precisely on the disturbances caused by side wind, and more effectively rejects its effect on motion and trajectory of the vehicle 50.

**Fig. 6** depicts a flow diagram of a method for supporting wind detection and compensation in a vehicle, the vehicle comprising a driving automation system and a communication interface for sending and receiving communication data. The method comprises the steps of:
Collecting (S110), from the driving automation system and via the communication interface, data about wind situation at a current and at an anticipated location of the vehicle;
Assessing (S120), on the basis of the data, the wind situation;
Providing (S130), on the basis of the wind situation, a compensation support for the driving automation system.

This method may also be a computer-implemented method. A person of skill in the art would readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

The description and drawings merely illustrate the principles of the disclosure. The scope of the invention is defined by the appended claims.

### LIST OF REFERENCE SIGNS

- 50: vehicle
- 60: road
- 62: curve
- 70: data about wind situation
- 72: weather stations as data source
- 75: other vehicles as data source
- 77: cloud service as data source
- 92: acceleration of vehicle caused by wind
- 95: acceleration of vehicle caused by curvature
- 100: system
- 110: data collection module
- 120: assessment module
- 130: compensation module
- 200: driving automation system
- 202: on-board controller
- 205: Highly Automated Driving software
- 210: sensors
- 213: field of view of a front-facing sensor
- 220: planning operations of automated driving system
- 222: behavior planner
- 223: maneuver parameters modified by compensation support
- 225: path / trajectory planner
- 226: output of path / trajectory planner modified by compensation support
- 230: execution operations of automated driving system
- 232: motion controller
- 233: angle / torque or brake demand modified by compensation support
- 235: steering / brake controller
- 240: feedback control operations of automated driving system
- 300: communication interface
- 400: actuation
- S110, S120, S130: steps of a method

## Claims

1. A system for supporting wind detection and compensation in a commercial vehicle with a trailer and with a driving automation system, the vehicle comprising a communication interface for sending and receiving communication data, wherein the driving automation system employs sensor data from vehicle sensors, and the vehicle sensors comprise an exteroceptive sensor, the system comprising:
a data collection module, configured to collect data, from the driving automation system or via the communication interface, about a wind situation at a current or anticipated location of the vehicle;
an assessment module, configured to assess the wind situation; and
a compensation module, configured to provide, on the basis of the wind situation, a compensation support for the driving automation system,
**characterized in that**
the exteroceptive sensor is a sensor with a side of the vehicle in its field of view, and the assessment module is configured to estimate, using the sensor data, a current wind impact on the vehicle from an inclination of the vehicle body by recognizing a change in the inclination at the trailer, and to use the current wind impact in the assessment of the wind situation.

2. The system of claim 1, wherein the driving automation system comprises a feedback control scheme,
**characterized in that**
the compensation module is configured to adapt the feedback control scheme.

3. The system of one of the preceding claims,
**characterized in that**
the data collection module is configured to collect one or more of the following:
- location specific weather data;
- data on wind from other vehicles within a predefined range from the current or anticipated location.

4. The system of one of the preceding claims, wherein the driving automation system generates a driving mode information,
**characterized in that**
the compensation module is configured to employ the driving mode information in providing the compensation support.

5. The system of one of the preceding claims, wherein the vehicle sensors comprise a sensor for detecting a lateral acceleration of the vehicle, and wherein the driving automation system comprises a means for detecting a current driving situation, **characterized in that**
the assessment module is configured to estimate, from the lateral acceleration and the current driving situation, an excess lateral acceleration attributable to a side wind, and to use the excess lateral acceleration in the assessment of the wind situation.

6. A commercial vehicle comprising a trailer and a driving automation system for performing automatic driving tasks, wherein the driving automation system employs sensor data from vehicle sensors, and the vehicle sensors comprise an exteroceptive sensor with a side of the vehicle in its field of view, **characterized by**
a system of one of the preceding claims.

7. A method for supporting wind detection and compensation in a commercial vehicle, the vehicle comprising a trailer and a driving automation system and a communication interface for sending and receiving communication data, wherein the driving automation system employs sensor data from vehicle sensors, and the vehicle sensors comprise an exteroceptive sensor,
the method comprising the steps of
collecting, from the driving automation system and via the communication interface, data about wind situation at a current and at an anticipated location of the vehicle; assessing, on the basis of the data, the wind situation; and
providing, on the basis of the wind situation, a compensation support for the driving automation system,
**characterized in that**
the exteroceptive sensor is a sensor with a side of the vehicle in its field of view, and **in that** assessing the wind situation comprises estimating, using the sensor data, a current wind impact on the vehicle from an inclination of the vehicle body by recognizing a change in the inclination at the trailer.

8. A computer product having a program code for performing the method of claim 7 when the computer program is executed on a system according to claim 1.

## Patentansprüche

1. System zum Unterstützen von Winddetektion und -kompensation in einem Nutzfahrzeug mit einem Anhänger und mit einem Fahrautomatisierungssystem, wobei das Fahrzeug eine Kommunikationsschnittstelle zum Senden und Empfangen von Kommunikationsdaten umfasst, wobei das Fahrautomatisierungssystem Sensordaten von Fahrzeugsensoren nutzt und die Fahrzeugsensoren einen exterozeptiven Sensor umfassen, das System umfassend:
ein Datenerfassungsmodul, das konfiguriert ist, von dem Fahrautomatisierungssystem oder mittels der Kommunikationsschnittstelle Daten über Windverhältnisse an einem aktuellen oder erwarteten Standort des Fahrzeugs zu erfassen;
ein Beurteilungsmodul, das konfiguriert ist, die Windverhältnisse zu beurteilen; und
ein Kompensationsmodul, das konfiguriert ist, auf der Grundlage der Windverhältnisse eine Kompensationsunterstützung für das Fahrautomatisierungssystem bereitzustellen,
**dadurch gekennzeichnet, dass**
der exterozeptive Sensor ein Sensor mit einer Seite des Fahrzeugs in seinem Sichtfeld ist, und das Beurteilungsmodul konfiguriert ist, unter Verwendung der Sensordaten eine aktuelle Windeinwirkung auf das Fahrzeug aus einer Neigung der Fahrzeugkarosserie abzuschätzen, indem eine Änderung der Neigung an dem Anhänger erkannt wird, und die aktuelle Windeinwirkung bei der Beurteilung der Windverhältnisse zu verwenden.

2. System nach Anspruch 1, wobei das Fahrautomatisierungssystem ein Rückmeldungssteuerschema umfasst,
**dadurch gekennzeichnet, dass**
das Kompensationsmodul konfiguriert ist, das Rückmeldungssteuerschema anzupassen.

3. System nach einem der vorstehenden Ansprüche,
**dadurch gekennzeichnet, dass**
das Datenerfassungsmodul konfiguriert ist, eines oder mehrere von Folgendem zu erfassen:
- standortspezifischen Wetterdaten;
- Daten zum Wind von anderen Fahrzeugen innerhalb eines vordefinierten Bereichs von dem aktuellen oder erwarteten Standort.

4. System nach einem der vorstehenden Ansprüche, wobei das Fahrautomatisierungssystem Fahrmodusinformationen erzeugt,
**dadurch gekennzeichnet, dass**
das Kompensationsmodul konfiguriert ist, beim Bereitstellen der Kompensationsunterstützung die Fahrmodusinformationen zu nutzen.

5. System nach einem der vorstehenden Ansprüche, wobei die Fahrzeugsensoren einen Sensor zum Detektieren einer Querbeschleunigung des Fahrzeugs umfassen und wobei das Fahrautomatisierungssystem ein Mittel zum Detektieren der aktuellen Fahrverhältnisse umfasst,
**dadurch gekennzeichnet, dass**
das Beurteilungsmodul konfiguriert ist, aus der Querbeschleunigung und den aktuellen Fahrverhältnissen eine einem Seitenwind zurechenbare übermäßige Querbeschleunigung abzuschätzen und die übermäßige Querbeschleunigung bei der Beurteilung der Windverhältnisse zu verwenden.

6. Nutzfahrzeug, umfassend einen Anhänger und ein Fahrautomatisierungssystem zum Durchführen automatischer Fahraufgaben, wobei das Fahrautomatisierungssystem Sensordaten von Fahrzeugsensoren nutzt und die Fahrzeugsensoren einen exterozeptiven Sensor mit einer Seite des Fahrzeugs in seinem Sichtfeld umfassen,
**gekennzeichnet durch**
ein System nach einem der vorstehenden Ansprüche.

7. Verfahren zum Unterstützen der Winddetektion und -kompensation in einem Nutzfahrzeug, wobei das Fahrzeug einen Anhänger und ein Fahrautomatisierungssystem und eine Kommunikationsschnittstelle zum Senden und Empfangen von Kommunikationsdaten umfasst, wobei das Fahrautomatisierungssystem Sensordaten von Fahrzeugsensoren nutzt und die Fahrzeugsensoren einen exterozeptiven Sensor umfassen,
wobei das Verfahren die Schritte des Erfassens von Daten über die Windverhältnisse an einem aktuellen und an einem erwarteten Standort des Fahrzeugs von dem Fahrautomatisierungssystem und mittels der Kommunikationsschnittstelle umfasst;
Beurteilen der Windverhältnisse auf der Grundlage der Daten; und
Bereitstellen einer Kompensationsunterstützung für das Fahrautomatisierungssystem auf der Grundlage der Windverhältnisse,
**dadurch gekennzeichnet, dass** der exterozeptive Sensor ein Sensor mit einer Seite des Fahrzeugs in seinem Sichtfeld ist, und dadurch, dass Beurteilen der Windverhältnisse unter Verwendung der Sensordaten Abschätzen einer aktuellen Windeinwirkung auf das Fahrzeug aus einer Neigung der Fahrzeugkarosserie umfasst, indem eine Änderung der Neigung an dem Anhänger erkannt wird.

8. Computerprodukt, das einen Programmcode zum Durchführen des Verfahrens nach Anspruch 7 aufweist, wenn das Computerprogramm auf einem System nach Anspruch 1 ausgeführt wird.

## Revendications

1. Système d'assistance à la détection et à la compensation du vent dans un véhicule commercial doté d'une remorque et doté d'un système d'automatisation de conduite, le véhicule comprenant une interface de communication pour l'envoi et la réception de données de communication, dans lequel le système d'automatisation de conduite emploie des données de capteur provenant de capteurs de véhicule et les capteurs de véhicule comprennent un capteur extéroceptif, le système comprenant :
un module de collecte de données, configuré pour collecter des données, provenant du système d'automatisation de conduite ou par l'intermédiaire de l'interface de communication, concernant une condition du vent à un emplacement actuel ou anticipé du véhicule ;
un module d'évaluation, configuré pour évaluer la situation du vent ; et
un module de compensation, configuré pour fournir, sur la base de la condition du vent, une assistance de compensation au système d'automatisation de conduite,
**caractérisé en ce que**
le capteur extéroceptif est un capteur dont un côté du véhicule se trouve dans son champ de vision et le module d'évaluation est configuré pour estimer, en utilisant les données de capteur, un impact du vent actuel sur le véhicule à partir de l'inclinaison de la carrosserie de véhicule en reconnaissant une modification de l'inclinaison au niveau de la remorque et pour utiliser l'impact du vent actuel lors de l'évaluation de la condition du vent.

2. Système selon la revendication 1, dans lequel le système d'automatisation de conduite comprend un schéma de commande par rétroaction,
**caractérisé en ce que**
le module de compensation est configuré pour adapter le schéma de commande par rétroaction.

3. Système selon l'une quelconque des revendications précédentes,
**caractérisé en ce que**
le module de collecte de données est configuré pour collecter un ou plusieurs des éléments suivants :
- des données météorologiques spécifiques à l'emplacement ;
- des données sur le vent provenant d'autres véhicules dans une plage prédéfinie à partir de l'emplacement actuel ou anticipé.

4. Système selon l'une quelconque des revendications précédentes, dans lequel le système d'automatisation de conduite génère des informations de mode de conduite,
**caractérisé en ce que**
le module de compensation est configuré pour employer les informations de mode de conduite pour fournir l'assistance de compensation.

5. Système selon l'une quelconque des revendications précédentes, dans lequel les capteurs de véhicule comprennent un capteur pour détecter une accélération latérale du véhicule et dans lequel le système d'automatisation de conduite comprend un moyen pour détecter une situation de conduite actuelle,
**caractérisé en ce que**
le module d'évaluation est configuré pour estimer, à partir de l'accélération latérale et de la situation de conduite actuelle, une accélération latérale excessive pouvant être attribuée à un vent latéral et pour utiliser cette accélération latérale excessive lors de l'évaluation de la condition du vent.

6. Véhicule commercial comprenant une remorque et un système d'automatisation de conduite permettant de réaliser des tâches de conduite automatique, dans lequel le système d'automatisation de conduite emploie des données de capteur provenant de capteurs de véhicule et les capteurs de véhicule comprennent un capteur extéroceptif dont un côté du véhicule se trouve dans son champ de vision,
**caractérisé par**
un système selon l'une quelconque des revendications précédentes.

7. Procédé d'assistance à la détection et à la compensation du vent dans un véhicule commercial, le véhicule comprenant une remorque, un système d'automatisation de conduite et une interface de communication pour l'envoi et la réception de données de communication, dans lequel le système d'automatisation de conduite emploie des données de capteur provenant de capteurs de véhicule et les capteurs de véhicule comprennent un capteur extéroceptif,
procédé comprenant les étapes de collecte, à partir du système d'automatisation de conduite et par l'intermédiaire de l'interface de communication, de données relatives à la condition du vent à un emplacement actuel et à un emplacement anticipé du véhicule ;
d'évaluation, sur la base des données, de la condition du vent ; et
de fourniture, sur la base de la condition du vent, d'une assistance de compensation au système d'automatisation de conduite,
**caractérisé en ce que** le capteur extéroceptif est un capteur dont un côté du véhicule se trouve dans son champ de vision et **en ce que** l'évaluation de la condition du vent comprend l'estimation, en utilisant les données de capteur, d'un impact du vent actuel sur le véhicule à partir d'une inclinaison de la carrosserie de véhicule en reconnaissant une modification de l'inclinaison au niveau de la remorque.

8. Produit informatique présentant un code de programme pour réaliser le procédé selon la revendication 7, lorsque le programme informatique est exécuté sur un système selon la revendication 1.
